# EUROPÄISCHE PATENTSCHRIFT

(11) **EP 3 160 707 B1**
(45) Veröffentlichungstag und Bekanntmachung des Hinweises auf die Patenterteilung: **16.05.2018**
(21) Anmeldenummer: 15731909.6
(22) Anmeldetag: 25.06.2015
(51) Int. Cl.: B29C 44/34, B29C 44/44, B32B 5/24, B32B 7/12, B32B 15/04, B32B 15/18, B29C 44/14, C08J 9/04, C08J 9/232, B29K 33/00, B29L 31/30

(54) **DRUCKABHÄNGIGES FORMSCHÄUMEN VON POLY(METH)ACRYLIMID-PARTIKELN IN GESCHLOSSENEN WERKZEUGEN ZUR HERSTELLUNG VON HARTSCHAUMSTOFFKERNEN**
PRESSURE-DEPENDENT FOAM MOULDING OF POLY(METH)ACRYLIMIDE PARTICLES IN CLOSED MOULDS FOR PRODUCING RIGID FOAM CORES
MOUSSE MOULÉE EN FONCTION DE LA PRESSION, DE PARTICULES DE POLY(MÉTH)ACRYLIMIDE DANS DES OUTILS FERMÉS, POUR LA PRODUCTION DE NOYAUX EN MOUSSE RIGIDE

(30) Priorität: 27.06.2014 DE 102014009338
(43) Veröffentlichungstag der Anmeldung: 03.05.2017
(73) Patentinhaber: Evonik Röhm GmbH, 64293 Darmstadt (DE)
(72) Erfinder: BERNHARD, Kay, 64291 Darmstadt (DE); LIEBL, Ina, 64347 Griesheim (DE); DENK, Tim, 63868 Grosswallstadt (DE); BECKER, Florian, 64289 Darmstadt (DE); RICHTER, Thomas, 64293 Darmstadt (DE)
(86) Internationale Anmeldenummer: PCT/EP2015/064316
(87) Internationale Veröffentlichungsnummer: WO 2015/197734

(56) Entgegenhaltungen:
- EP-A2- 0 874 019
- CN-A- 101 857 656
- DE-A1-102011 085 026
- JP-A- 2005 272 665

## Beschreibung

### Gebiet der Erfindung

Die Erfindung betrifft ein Verfahren zur Herstellung von formgeschäumten Poly(meth)acrylimid- (P(M)I-), insbesondere von Polymethacrylimid- (PMI-)Kernen, die zum Beispiel im Automobil- oder Flugzeugbau zum Einsatz kommen können. Das Verfahren zeichnet sich dabei dadurch aus, dass ein unter Druck vorgeheiztes Polymergranulat oder -pulver weiterhin unter Druck in ein Presswerkzeug eingefüllt und dort unter Entspannung aufgeschäumt wird. Insbesondere zeichnet sich das Verfahren dadurch aus, dass dazu ein bevorzugt zweischaliges Presswerkzeug optional zum Heizen als auch zum Kühlen des Granulats, bzw. des daraus gebildeten Hartschaumkerns verwendet wird.

### Stand der Technik

In DE 27 26 260 wird die Herstellung von Poly(meth)acrylimid-Schäumen (P(M)I-Schäumen) beschrieben, die ausgezeichnete mechanische Eigenschaften auch bei hohen Temperaturen aufweisen. Die Herstellung der Schäume erfolgt im Gussverfahren, d.h. die Monomere und erforderliche Zusatzstoffe werden gemischt und in einer Kammer polymerisiert. Das Polymerisat wird in einem zweiten Schritt durch Erwärmen geschäumt. Dieses Verfahren ist sehr aufwendig und kaum zu automatisieren.

DE 3 630 930 beschreibt eine weiteres Verfahren zur Schäumung der oben genannten Copolymerplatten aus Methacrylsäure und Methacrylnitril. Hierbei werden die Polymerplatten mit Hilfe eines Mikrowellenfeldes zum Schäumen gebracht, weshalb dieses im Folgenden als Mikrowellenverfahren bezeichnet wird. Hierbei muss beachtet werden, dass die zu schäumende Platte oder zumindest ihre Oberfläche vorher bis oder über den Erweichungspunkt des Materials erhitzt werden muss. Da unter diesen Bedingungen naturgemäß auch die Schäumung des durch die äußerliche Erwärmung erweichten Materials einsetzt, ist der Schäumprozess allein durch den Einfluss eines Mikrowellenfeldes nicht steuerbar, sondern muss von einem begleitenden Heizen von außen mitgesteuert werden. Es wird also zu dem normalen einstufigen Heißluftverfahren ein Mikrowellenfeld hinzugeschaltet um die Schäumung zu beschleunigen. Das Mikrowellenverfahren hat sich jedoch als zu kompliziert und daher nicht praxisrelevant erwiesen und findet bis heute keine Anwendung.

Neben PMI-Schäumen sind mit ähnlichen Eigenschaften auch Schäume auf Basis von Methacrylsäure und Acrylnitril (PI-Schäume) bekannt. Diese werden beispielsweise in der CN 100420702C beschrieben. Jedoch werden auch diese Schäume mittels Platten hergestellt.

Es sind neben diesen Verfahren, die von einer nicht geschäumten Polymerplatte ausgehen, auch so genannte In-Mold-Foaming Prozesse, ausgehend von einem Granulat, bekannt. Gegenüber den beschriebenen Verfahren haben diese jedoch grundsätzlich mehrere Nachteile. So wird nur eine ungleichmäßige Porenstruktur, die sich zwischen dem Inneren der ursprünglichen Partikel und den Grenzflächen zwischen den ursprünglichen Partikeln unterscheidet, erzielt. Weiterhin ist die Dichte des Schaums aufgrund der ungleichmäßigen Verteilung der Partikel beim Aufschäumen - wie bereits beschrieben - zusätzlich inhomogen. Weiterhin kann man diesen aus Granulat geschäumten Produkten eine schlechtere Kohäsion an den Grenzflächen, die sich zwischen den ursprünglichen Partikeln beim Schäumen bilden, und damit gegenüber aus einer Halbzeugplatte geschäumten Materialien schlechtere mechanische Eigenschaften beobachten.

In WO 2013/05947 wird ein In-Mold-Verfahren beschrieben, bei dem zumindest letzteres Problem dadurch gelöst wurde, dass die Partikel vor dem Abfüllen in das formgebende Schäumungswerkzeug mit einem Haftvermittler, z.B. mit einem Polyamid oder einem Polymethacrylat beschichtet werden. Damit wird eine sehr gute Korngrenzenhaftung erzielt. Die ungleiche Porenverteilung im Endprodukt wird durch diese Methode jedoch nicht vermieden.

In CN 101857656A wird auch ein In-Mold-Verfahren beschrieben, bei dem PMI-Partikel vor-geschäumt werden. Jedoch ist das In-Mold-Foaming für Hartschäume, insbesondere für P(M)I-Schäume bis dato kaum beschrieben. Für andere Schaumwerkstoffe sind solche Verfahren dagegen schon lange bekannt. So werden Polyurethan-Schäume aus einer entsprechenden reaktiven Flüssigkeit zumeist bei Raumtemperatur hergestellt. Schäume aus PE, PP, Polystyrol oder Polymilchsäure (PLA) werden in einem In-Mold-Foaming-Prozess aus einem Granulat hergestellt.

In DE 10 2014 209 425 A1 wird ein Verfahren offenbart, bei dem ein P(M)I-Granulat in einem zweischaligen Presswerkzeug mit konturfolgenden Kavitäten, mittels derer sowohl geheizt als auch gekühlt wird, thermisch aufgeschäumt wird. Dieses Verfahren stellt gegenüber dem Stand der Technik eine deutliche Effizienzsteigerung dar. Da jedoch im gleichen Werkzeug sowohl erhitzt und damit geschäumt, als auch gekühlt wird, ist die Werkzeugbelegzeit und damit die Produktionstaktung noch immer relativ lang. Weiterhin ergeben sich aufgrund von Temperaturgradienten innerhalb des zu schäumenden Materials von außen nach innen noch immer feststellbare Dichtegradienten im hergestellten Schaumkern.

### Aufgabe

Vor dem Hintergrund des diskutierten Standes der Technik war es daher Aufgabe der vorliegenden Erfindung, ein neues Verfahren zur Verfügung zu stellen, womit einfach und mit gegenüber dem Stand der Technik deutlich höheren Durchsatzgeschwindigkeit P(M)I-Partikel in einem In-Mold-Foaming-Prozess zu geformten Hartschaumkernen verarbeitet werden können.

Insbesondere war es Aufgabe der vorliegenden Erfindung ein Verfahren für das In-Mold-Foaming von P(M)I zur Verfügung zu stellen, dass zu Endprodukten mit einer sehr gleichmäßigen Dichteverteilung und engen Porengrößenverteilung führt.

Insbesondere bestand die Aufgabe, dass dieses Verfahren im Vergleich zu Verfahren des Standes der Technik mit besonders verkürzten Zykluszeiten durchführbar ist und ohne besondere Nacharbeiten bereits zu Hartschaumkernen in der finalen Geometrie führt.

Weitere, an dieser Stelle nicht explizit diskutierte Aufgaben, können sich aus dem Stand der Technik, der Beschreibung, den Ansprüchen oder den Ausführungsbeispielen ergeben.

### Lösung

Im Weiteren werden unter der Formulierung Poly(meth)acrylimid (P(M)I) Polymethacrylimide, Polyacrylimide oder Mischungen daraus verstanden. Entsprechendes gilt für die entsprechenden Monomere wie (Meth)acrylimid bzw. (Meth)acrylsäure. So werden beispielsweise unter dem Begriff (Meth)acrylsäure sowohl Methacrylsäure als auch Acrylsäure sowie Mischungen aus diesen beiden verstanden.

Gelöst werden die genannten Aufgaben durch das Bereitstellen eines neuartigen Verfahrens zur Herstellung von Poly(meth)acrylimid- gemäß Anspruch 1. Ein besonderer Vorteil des vorliegenden Verfahrens ist es, dass das Schäumen innerhalb von höchstens 2 min durchgeführt werden kann, und dass die Verfahrensschritte a. bis e. zusammen innerhalb einer kurzen Zeitspanne von 5 bis 45 min durchgeführt werden können. Ein weiterer Vorteil liegt in der gleichmäßigen Temperaturverteilung innerhalb des Materials im Moment des Aufschäumes. Dies führt zu einer besonders gleichmäßigen Verteilung und Größenverteilung der Poren im Endprodukt. So weist das Endprodukt gegenüber Schäumen des Standes der Technik keine oder nur minimale Dichtegradienten auf. Bei Schäumen des Standes der Technik schäumen die äußeren Bereiche in der Regel stärker auf als innenliegende Bereiche. Erfindungsgemäß liegt die Temperatur T₁ zwischen 150 und 250 °C, besonders bevorzugt zwischen 180 und 220 °C. Druck p₁ in Verfahrensschritt a. und Druck p₂ in Verfahrensschritt b. liegen jeweils zwischen 2 und 20 bar. Temperatur T₂ wird auf einen Wert zwischen 150 und 250 °C, besonders bevorzugt zwischen 180 und 220 °C, eingestellt. Der Druck p₃ liegt zwischen 0,1 und 2,0 bar, besonders bevorzugt zwischen Normaldruck und 1,5 bar.

In einer besonderen Variante des erfindungsgemäßen Verfahrens wird Verfahrensschritt b. vor Verfahrensschritt a. durchgeführt. In dieser Variante erfolgt das Vorheizen der Partikeln in dem Werkzeug, in dem in Verfahrensschritt c auch geschäumt wird. Bei dieser Variante ist der Druck p₂ flexibel wählbar und es kann z.B. bei Normaldruck eingefüllt werden. Zwar wird mit dieser Variante der große Vorteil eines beschleunigten Verfahrens gegenüber einer rein thermischen Schäumung ohne äußere Druckänderung nicht nennenswert erreicht. Dafür wird ein zweiter großer Vorteil des erfindungsgemäßen Verfahrens dennoch erzielt. Das Endprodukt weist gegenüber dem Produkt einer rein thermischen Schäumung eine deutlich bessere und gleichmäßigere Porenverteilung und -struktur auf. Dies lässt sich dadurch erklären, dass mit dem erfindungsgemäßen Schäumen unter Druckwechsel, der Schäumungsprozess im gesamten Werkzeug gleichzeitig - und nicht wie beim Schäumen unter Aufheizen von außen nach Innen - erfolgt.

Bevorzugt gegenüber dieser Variante, ist jedoch eine Ausführung des erfindungsgemäßen Verfahrens, bei der Verfahrensschritt a. vor Verfahrensschritt b. durchgeführt wird, d.h. das Aufheizen der Partikel erfolgt außerhalb des Werkzeugs. Mittels dieser Ausführung ist es möglich, den Prozess bei einer Serienproduktion deutlich zu beschleunigen, da Verfahrensschritt a. einerseits und Verfahrensschritte c. bis e. andererseits parallel zu einander durchgeführt werden können.

Bei dieser Ausführungsvariante ist es besonders bevorzugt die Partikel in Verfahrensschritt a. in einem Vorratsbehälter bei Temperatur T₁ und dem Druck p₁ zu lagern und damit vorzuheizen. Die Partikel werden dann batchweise in Verfahrensschritt b. in das Werkzeug gefüllt, wobei nach dem batchweisen Einfüllen jeweils die Verbindung zwischen Vorratsbehälter und Werkzeug geschlossen wird, bevor die Entspannung in Verfahrensschritt c. erfolgt. Die Lagerung der Partikel in einem z.B. druck- und temperaturneutralen Vorratsbehälter ist natürlich auch in der ersten beschriebenen Variante des erfindungsgemäßen Verfahrens möglich.

Zusätzlich oder alternativ hat es sich als sehr vorteilhaft und als das Verfahren beschleunigend erwiesen, die Partikel in Verfahrensschritt b. in das Werkzeug einzusaugen und/oder einzublasen.

Einsaugen bedeutet dabei, dass bei der Herstellung einer Verbindung zwischen dem Werkzeug und z.B. einem Vorratsbehälter der Druck im Werkzeug geringer ist als in dem Vorratsbehälter. Zusätzlich kann das Werkzeug eine oder mehrere variabel zuschaltbare Saugvorrichtungen aufweisen.

Beim Einblasen verfügt das Vorratsgefäß oder eine entsprechende Einfüllvorrichtung eine Düse, mittels derer die Partikel in das Werkzeug geblasen werden. Auch eine Kombination aus Einblasen und Einsaugen ist durchaus eine Option für das erfindungsgemäße Verfahren.

Dabei kann beispielsweise das Werkzeug vor dem Einfüllen der Partikel im geschlossenen Zustand senkrecht gestellt. Die Befüllung erfolgt hier dann durch eine entsprechende Öffnung auf der Oberseite des senkrecht gestellten Werkzeugs in den Innenraum. Zum Einsaugen kann das Werkzeug auf der Unterseite dann mit einer Saugvorrichtung, die in Verfahrensschritt a., z.B. durch Öffnen einer sonst die Saugvorrichtung verdeckenden Klappe zugeschaltet wird, ausgestattet sein. Optional kann das Werkzeug im Innenraum auch über mehrere solcher Saugvorrichtungen verfügen.

Der Druck p₂ in Verfahrensschritt b. ergibt sich dabei aus dem Druck in der Partikelvorlage, wie z.B. einem Vorratsbehälter, dem Leerdruck des Werkzeugs und den Druckveränderungen, die sich aus Ansaug- bzw. Einblasvorrichtungen ergeben. Bei der Ausgestaltung der Parameter für Verfahrensschritt b. in der Variante, dass Verfahrensschritt a. vor Verfahrensschritt b. durchgeführt wird, ist erfindungsgemäß darauf zu achten, dass alle diese Parameter so eingestellt werden, dass p₂ maximal 10% unterhalb von p₁ liegt. Damit wird ein zu schnelles Aufschäumen der Partikel unterbunden. In der Ausgestaltung eines Gebläses zur Einfüllung der Partikel in das Werkzeug gemäß Verfahrensschritt b. kann es sogar durchaus sein, dass p₂ geringfügig höher ist als p₁. Außerdem kann es aufgrund der unterschiedlichen Drücke in Werkzeug und Vorratsbehälter, sowie durch das Einblasen und/oder Einsaugen durchaus zu Druckverläufen, -verteilungen oder -schwankungen während des Verfahrensschritts b. kommen. Dabei ist jedoch darauf zu achten, dass die oben genannte Bedingung eines Mindestdrucks für p₂ für mindestens 80% des Verfahrensschritts eingehalten wird und der Druck höchstens sehr kurz und nicht zu tief um mehr als 10% unter p₁ fällt.

Darüber hinaus ist es in Verfahrensschritt b. vorteilhaft, das Werkzeug bis zu einem Füllstand zwischen 50 und 100 %, bevorzugt zwischen 75 und 98 % mit Partikeln zu befüllen. 100 % Füllstand bedeutet in diesem Zusammenhang, dass das Werkzeug bis zum obersten Rand mit den Partikeln gefüllt wird. Natürlich verbleiben dabei zwischen den Partikeln Freiräume, deren Größe von der Partikelgröße und Partikelform abhängen. Diese Freiräume können theoretisch auch bei einem Füllstand von 100% bis zu 50% des Innenraums des Werkzeugs ausmachen. In Verfahrensschritt c. werden diese Freiräume schließlich durch das Schäumen geschlossen, so dass ein homogener Hartschaumkern gebildet wird.

Bezüglich des in den Verfahrensschritten b. bis e. und optional auch in Verfahrensschritt a. verwendeten Werkzeug ist es besonders bevorzugt, wenn das Werkzeug in beiden Schalen eine der Innenkontur folgende, die Fläche des Werkzeuginnenraums jeweils abdeckende Kavität aufweist. Durch diese Kavitäten wird in Verfahrensschritt c. eine Heizflüssigkeit und in Verfahrensschritt d. eine Kühlflüssigkeit geleitet.

Bevorzugt sind diese Kavitäten auf der Seite gegenüber dem Werkzeuginnenraum konturfolgend. Besonders bevorzugt ist auch die dieser entgegenliegende Außenseite des Werkzeugs gleichfalls konturfolgend. Weiterhin bevorzugt weisen die Kavitäten zwischen diesen beiden Seiten eine Dicke zwischen 2 und 20 cm, bevorzugt zwischen 5 und 12 cm auf. Darüber hinaus bevorzugt weisen die beidseitig konturfolgenden Teile des Werkzeugs zwischen Werkzeuginnenraum und der Kavität eine Dicke zwischen 2 und 15 cm, bevorzugt zwischen 4 und 12 cm auf.

Genauso bevorzugt handelt es sich bei der Heiz- und der Kühlflüssigkeit um die gleiche Art von Flüssigkeit. Diese Flüssigkeiten werden dabei insbesondere aus zwei unterschiedlichen Vorlagebehältern mit unterschiedlicher Temperatur in die Kavität geleitet. Dabei hat die Heizflüssigkeit bevorzugt eine Temperatur zwischen 180 und 250 °C und die Kühlflüssigkeit bevorzugt eine Temperatur zwischen 20 und 40 °C.

Als Heiz- bzw. Kühlflüssigkeit sind insbesondere Öle ohne Niedrigsiederanteile und einer Temperaturbeständigkeit bis mindestens 300 °C geeignet. Beispiel für ein geeignetes Öl ist SilOil P20.275.50 der Firma Huber.

Vor Verfahrensschritt b. kann der Innenraum des Werkzeugs mit so genannten Inserts ausgestattet werden. Diese werden beim Einfüllen des Granulats in Verfahrensschritt b. zunächst von diesem umgeben und dadurch im späteren Hartschaumkern als integraler Bestandteil dieses Werkstücks von der Schaummatrix ganz oder teilweise umschlossen. Bei diesen Inserts kann es sich zum Beispiel um Gegenstände mit einem Innengewinde handeln. Mittels dieses Innengewindes lassen sich die Hartschaumkerne später verschrauben. Analog können auch Bolzen, Haken, Rohre oder ähnliches eingebaut werden. Auch ist es möglich, Elektrochips oder Kabel bereits bei der Herstellung des Hartschaumkerns in diese zu integrieren.

In einer besonderen Ausführungsform handelt es sich bei diesen Inserts um Rohre, Klötze oder andere Platzhalter, die derart geformt und beschichtet sind, dass sie nach der Entnahme des geschäumten Hartschaumkerns in Verfahrensschritt e. einfach aus der Schaummatrix entfernt werden können. Auf diese Weise lassen sich beispielsweise Hohlräume, Aussparungen oder Löcher in dem Hartschaumkern realisieren.

Bezüglich der in Verfahrensschritt a. eingesetzten P(M)I-Partikel gibt es erfindungsgemäß verschiedene bevorzugte Ausführungsformen.

In einer ersten Ausführungsform handelt es sich bei den P(M)I-Partikeln um ein Mahlgut aus einem P(M)I-Plattenpolymerisat, welches als Gusspolymerisat erhalten wird. Diese Platten können beispielsweise in einer Mühle zu geeigneten Partikeln zerkleinert werden. Gemahlene P(M)I-Partikel werden in dieser Variante bevorzugt mit einer Partikelgröße zwischen 1,0 und 4,0 mm eingesetzt.

In einer bevorzugten Variante der Erfindung werden diese P(M)I-Partikeln vorgeschäumt, bevor diese in Verfahrensschritt a. in das Werkzeug gefüllt werden. Dabei ist darauf zu achten, dass das Vorschäumen nicht vollständig, sondern nur bis zu einem Schäumungsgrad zwischen 10 und 90 %, bevorzugt zwischen 20 und 80 % durchgeführt wird. Das endgültige Ausschäumen erfolgt dann in Verfahrensschritt c. Vorgeschäumte P(M)I-Partikel werden in dieser Variante bevorzugt mit einer Partikelgröße zwischen 1,0 und 25,0 mm eingesetzt. Bevorzugt weisen die diese vorgeschäumten P(M)I-Partikel eine Dichte zwischen 40 und 400 kg/m³, bevorzugt zwischen 50 und 300 kg/m³, besonders bevorzugt zwischen 60 und 220 kg/m³ und insbesondere bevorzugt zwischen 80 und 220 kg/m³ auf. Ein besonders geeignetes Verfahren zum Vorschäumen ist beispielsweise in DE 10 2013 225 132 A beschrieben.

In einer dritten Ausführungsform des Verfahrens handelt es sich bei den P(M)I-Partikeln um P(M)I-Suspensionspolymerisate. Solche Suspensionspolymerisate werden bevorzugt mit einer Partikelgröße zwischen 0,1 und 1,5 mm, besonders bevorzugt zwischen 0,1 und 1,0 mm eingesetzt. Die Herstellung von P(M)I-Suspensionspolymerisaten kann beispielsweise in WO 2014/124774 nachgelesen werden.

In einer vierten Ausführungsform des erfindungsgemäßen Verfahrens werden vorgeschäumte P(M)I-Suspensionspolymerisate in Verfahrensschritt a. vorgelegt. Bezüglich des Schäumungsgrads gilt das gleiche wie zuvor für die vorgeschäumten Partikel eines Mahlguts beschrieben. Bevorzugt weisen die diese vorgeschäumten P(M)I-Partikel eine Dichte zwischen 40 und 400 kg/m3, bevorzugt zwischen 50 und 300 kg/m3, besonders bevorzugt zwischen 60 und 220 kg/m3 und insbesondere bevorzugt zwischen 80 und 220 kg/m3 auf. Solche vorgeschäumten Suspensionspolymerisate werden bevorzugt mit einer Partikelgröße zwischen 0,1 und 2,0 mm, besonders bevorzugt zwischen 0,2 und 1,5 mm eingesetzt. Optional kann in dem erfindungsgemäßen Verfahren während der ersten Hälfte, bevorzugt während des ersten Viertels der Verfahrensdauer des Verfahrensschritts c. Heißluft, ein heißes Gas oder Dampf, bevorzugt ein heißes Inertgas oder Luft, in den Innenraum des Werkzeugs geleitet werden. Diese Einleitung hat dabei eine Temperatur zwischen 150 und 250 °C. Grundsätzlich ist ein solches Vorgehen jedoch eigentlich nicht nötig, da das Schäumen der vorgeheizten Partikel mittels Entspannen erfolgt und ein zusätzlicher Energieeintrag damit nicht mehr nötig ist. Gegenüber dem Stand der Technik können mittels des erfindungsgemäßen Verfahrens Formteile oder Schaumwerkstoffe mit einer deutlich homogeneren Porenstruktur und ohne Fehlstellen und gleichzeitig in komplexeren Formen hergestellt werden. Weiterhin ist es mit diesem Verfahren möglich, diese komplexen Formen schnell, in kurzen Taktzeiten und mit besonders guter Qualität herzustellen. Insbesondere weist das erfindungsgemäße Verfahren gegenüber Verfahren des Standes der Technik verkürzte Aufheiz- und Abkühlzyklen auf. Weiterhin hat das vorliegende Verfahren gegenüber dem Stand der Technik den großen Vorteil, dass dieses so schonend ist, dass die Oberfläche der P(M)I-Partikel nicht geschädigt wird.

In einer besonderen Ausführungsform des erfindungsgemäßen Verfahrens ist es möglich, die Innenseiten der Werkzeugschalen vor Verfahrensschritt b. mit Prepregs oder Organoblechen auszulegen. Diese Prepregs oder Organbleche können optional mit einem Klebstoff oder einem Haftvermittler beschichtet sein. Beim Schäumen in Verfahrensschritt c. verbindet sich der gebildete Schaum dann mit den beschichteten oder unbeschichteten Prepregs oder Organoblechen, die damit Deckschichten bilden. Mittels eines solchen Vorgehens wird der Hartschaumkern in Verfahrensschritt e. in Form eines Composite-Materials mit Deckschichten entnommen.

Zusätzlich können zur Verbesserung der Haftung zwischen Schaumkernmaterial und Deckschichten, die in späteren Verfahrensschritten zur Herstellung von Composite-Materialien eine Rolle spielt, Haftvermittler verwendet werden. Diese Haftvermittler können alternativ zu einer Applikation in einem späteren Verfahrensschritt auch schon vor dem erfindungsgemäßen Vorschäumen auf der Oberfläche der P(M)I-Partikel aufgetragen sein. Als Haftvermittler haben sich insbesondere Polyamide oder Poly(meth)acrylate als geeignet erwiesen. Es können aber auch niedermolekulare Verbindungen, die aus der Herstellung von Compositematerialien, insbesondere in Abhängigkeit vom verwendeten Matrixmaterial der Deckschicht, dem Fachmann bekannt sind, verwendet werden.

Das erfindungsgemäße Verfahren hat insbesondere den großen Vorteil, dass es sehr schnell und damit in Kombination mit Folgeprozessen mit sehr geringen Taktzeiten durchgeführt werden kann. Damit kann das erfindungsgemäße Verfahren sehr gut in einer Serienproduktion integriert werden.

Für das gesamte erfindungsgemäße Verfahren richten sich die zu wählenden Verfahrensparameter nach der Auslegung der im Einzelfall eingesetzten Anlage und deren Auslegung, sowie den eingesetzten Materialien. Sie können durch wenige Vorversuche für den Fachmann leicht ermittelt werden.

Das erfindungsgemäß verwendete Material ist P(M)I, insbesondere PMI. Solche P(M)I-Schäume werden auch als Hartschäume bezeichnet und zeichnen sich durch eine besondere Festigkeit aus. Die P(M)I-Schäume werden normalerweise in einem zweistufigen Verfahren hergestellt: a) Herstellung eines Gusspolymerisats und b) optionales teilweises Aufschäumen dieses Gusspolymerisats. Nach Stand der Technik werden diese dann in die gewünschte Form geschnitten bzw. gesägt. Eine Alternative, die technisch noch weniger etabliert ist, ist das ausgeführte In-Mold-Foaming für das das erfindungsgemäße Verfahren eingesetzt werden kann.

Zur Herstellung des P(M)I werden zunächst Monomergemische, welche (Meth)acrylsäure und (Meth)acrylnitril, vorzugsweise in einem Molverhältnis zwischen 2:3 und 3:2, als Hauptbestandteile enthalten, hergestellt. Zusätzlich können weitere Comonomere verwendet werden, wie z.B. Ester der Acryl- oder Methacrylsäure, Styrol, Maleinsäure oder Itaconsäure bzw. deren Anhydride oder Vinylpyrrolidon. Dabei sollte der Anteil der Comonomeren jedoch nicht mehr als 30 Gew% betragen. Geringe Mengen von vernetzenden Monomeren, wie z.B. Allylacrylat, können auch verwendet werden. Die Mengen sollten jedoch vorzugsweise höchstens 0,05 Gew% bis 2,0 Gew% betragen.

Das Gemisch für die Copolymerisation enthält ferner Treibmittel, die sich bei Temperaturen von etwa 150 bis 250 °C entweder zersetzen oder verdampfen und dabei eine Gasphase bilden. Die Polymerisation erfolgt unterhalb dieser Temperatur, so dass das Gusspolymerisat ein latentes Treibmittel enthält. Die Polymerisation findet zweckmäßig in Blockform zwischen zwei Glasplatten statt.

Die Herstellung solcher PMI-Halbzeuge ist dem Fachmann grundsätzlich bekannt und kann beispielsweise in EP 1 444 293, EP 1 678 244 oder WO 2011/138060 nachgelesen werden. Als PMI-Halbzeuge seien insbesondere solche genannt, die in aufgeschäumter Form unter dem Produktnamen ROHACELL® von der Firma Evonik Industries AG vertrieben werden. Bezüglich Herstellung und Verarbeitung sind zu den PMI-Schäumen Acrylimid-Halbzeuge (PI-Halbzeuge) als Analoga anzusehen. Aus toxikologischen Gründen sind diese jedoch gegenüber anderen Schaummaterialien deutlich weniger bevorzugt.

In einer zweiten Variante des erfindungsgemäßen Verfahrens handelt es sich bei den P(M)I-Partikeln um ein Suspensionspolymerisate, die als solche direkt in das Verfahren eingebracht werden können. Die Herstellung solcher Suspensionspolymerisate kann beispielsweise in DE 18 17 156 oder in WO 2014/124774 nachgelesen werden.

Die erfindungsgemäß hergestellten P(M)I-Hartschaumkerne zeichnen sich insbesondere dadurch aus, dass der Hartschaumkern eine komplexe Form aufweist, und dass die Oberfläche des Hartschaumkerns zu mindestens 95 % von einer aus P(M)I bestehenden, bevorzugt eine Dicke von mindestens 100 µm aufweisenden Haut umschlossen ist. Das bedeutet, dass diese neuartigen Hartschaumkerne keine offenen Poren auf der Oberfläche aufweisen und damit gegenüber den Materialien des Standes der Technik auch ohne eine zusätzliche Deckschicht über eine besondere Stabilität, z.B. gegenüber Stößen oder Schlägen, aufweisen. Diese Materialien sind für sich genommen und damit unabhängig von dem erfindungsgemäßen Verfahren neu und somit gleichfalls Bestandteil der vorliegenden Erfindung.

Bevorzugt weisen diese neuartigen P(M)I-Hartschaumkerne eine Dichte zwischen 25 und 220 kg/m³ auf. Weiterhin sind diese optional mit den zuvor beschriebenen Inserts versehen.

Die erfindungsgemäß hergestellten geschäumten Hartschaumkerne aus P(M)I können beispielsweise zu Schaumkern-Composite-Materialien weiterverarbeitet werden. Diese Schaumformteilen bzw. Schaumkern-Composite-Materialien können insbesondere Anwendung in der Serienfertigung z.B. für Karosseriebau oder für Innenverkleidungen in der Automobilindustrie, Interieurteile im Schienenfahrzeugs- oder Schiffsbau, in der Luft- und Raumfahrtindustrie, im Maschinenbau, bei der Herstellung von Sportgeräten, beim Möbelbau oder bei der Konstruktion von Windkraftanlagen finden. Insgesamt sind die erfindungsgemäßen Hartschaumkerne für jegliche Art des Leichtbaus prinzipiell geeignet.

## Patentansprüche

1. Verfahren zur Herstellung von Poly(meth)acrylimid- (P(M)I)-Hartschaumkernen, folgende Verfahrensschritte aufweisend:
a. Erhitzen von P(M)I-Partikeln auf eine Normaldruck-Schäumungstemperatur T₁, die zwischen 150 und 250 °C liegt, wobei dies unter einem Druck p₁, der zwischen 2 und 20 bar liegt, erfolgt, bei dem eine Volumenzuname der P(M)I-Partikel von höchstens 10 Vol% in 10 min erfolgt,
b. Einfüllen der P(M)I-Partikeln in ein Werkzeug, wobei das Einfüllen bei einem Druck p₂, der zwischen 2 und 20 bar liegt, erfolgt und anschließendes Schließen des Werkzeugs,
c. Entspannen des Werkzeuginnenraums auf einen Druck p₃, zwischen 0,1 und 2,0 bar liegt, bei einer Temperatur T₂, die zwischen 150 und 250 °C liegt, wobei ein Schäumen der Partikel erfolgt,
d. Kühlen des Werkzeuginnenraums auf eine Temperatur T₃ und
e. Öffnen und Entnahme des Hartschaumkerns.

2. Verfahren gemäß Anspruch 1, **dadurch gekennzeichnet, dass** es sich bei den P(M)I-Partikeln um vorgeschäumte P(M)I-Partikel mit einer Partikelgröße zwischen 1,0 und 25,0 mm handelt.

3. Verfahren gemäß Anspruch 1, **dadurch gekennzeichnet, dass** es sich bei den P(M)I-Partikeln um P(M)I-Suspensionspolymerisate mit einer Partikelgröße zwischen 0,1 und 1,0 mm handelt.

4. Verfahren gemäß einem der Ansprüche 1 bis 3, **dadurch gekennzeichnet, dass** das Schäumen innerhalb von höchstens 2 min durchgeführt wird, und dass die Verfahrensschritte a. bis e. zusammen innerhalb von 5 bis 45 min durchgeführt werden.

5. Verfahren gemäß einem der Ansprüche 1 bis 4, **dadurch gekennzeichnet, dass** Verfahrensschritt b. vor Verfahrensschritt a. durchgeführt wird.

6. Verfahren gemäß einem der Ansprüche 1 bis 4, **dadurch gekennzeichnet, dass** die Verfahrensschritte a. bis e. in der in Anspruch 1 angegebenen Reihenfolge durchgeführt werden, und dass der Druck p₂ höchstens 10% geringer ist als p₁.

7. Verfahren gemäß Anspruch 1, **dadurch gekennzeichnet, dass** die Temperatur T₂ zwischen 180 und 220 °C liegt, und dass Druck p₃ zwischen Normaldruck und 1,5 bar liegt.

8. Verfahren gemäß einem der Ansprüche 1 bis 7, **dadurch gekennzeichnet, dass** die Partikel in Verfahrensschritt b. in das Werkzeug eingesaugt und/oder eingeblasen werden.

9. Verfahren gemäß einem der Ansprüche 1 bis 8, **dadurch gekennzeichnet, dass** das Werkzeug in Verfahrensschritt b. zu einem Füllstand zwischen 50 und 100 % mit Partikeln gefüllt wird.

10. Verfahren gemäß einem der Ansprüche 1 bis 9, **dadurch gekennzeichnet, dass** die Partikel in Verfahrensschritt a. in einem Vorratsbehälter bei Temperatur T₁ und dem Druck p₁ gelagert werden und batchweise in Verfahrensschritt b. in das Werkzeug gefüllt werden, wobei nach dem batchweisen Einfüllen jeweils die Verbindung zwischen Vorratsbehälter und Werkzeug geschlossen wird, bevor die Entspannung in Verfahrensschritt c. erfolgt.

11. Verfahren gemäß einem der Ansprüche 1 bis 10, **dadurch gekennzeichnet, dass** das Werkzeug in beiden Schalen eine der Innenkontur folgende, die Fläche des Werkzeuginnenraums jeweils konturfolgend abdeckende Kavität mit einer Dicke zwischen 2 und 20 cm aufweist, durch die in Verfahrensschritt c. optional eine Heizflüssigkeit und in Verfahrensschritt d. eine Kühlflüssigkeit geleitet wird.

12. Verfahren gemäß Anspruch 11, **dadurch gekennzeichnet, dass** es sich bei der Heiz- und der Kühlflüssigkeit um die gleiche Art von Flüssigkeit handelt, die aus zwei unterschiedlichen Vorlagebehältern mit unterschiedlicher Temperatur in die Kavität geleitet werden, dass die Heizflüssigkeit eine Temperatur zwischen 180 und 250 °C aufweist, und dass die Kühlflüssigkeit eine Temperatur zwischen 20 und 40 °C aufweist.

13. Verfahren gemäß mindestens einem der Ansprüche 1 bis 12, **dadurch gekennzeichnet, dass** die Innenseiten der Werkzeugschalen vor Verfahrensschritt b. mit Prepregs oder Organoblechen ausgelegt sind und der Hartschaumkern in Verfahrensschritt e. in Form eines Composite-Materials mit Deckschichten entnommen wird.

## Claims

1. Process for the production of rigid poly(meth)acrylimide (P(M)I) foam cores, comprising the following steps:
a. heating of P(M)I particles to an atmospheric-pressure-foaming temperature T₁ which is from 150 to 250°C , where this takes place under a pressure p₁ which is from 2 to 20 bar at which a volume increase of the P(M)I particles of at most 10% by volume takes place in 10 min,
b. charging of the P(M)I particles to a mould, where the charging takes place at a pressure p₂ which is from 2 to 20 bar, and then closing of the mould,
c. depressurization of the space within the mould to a pressure p₃ which is from 0.1 to 2.0 bar at a temperature T₂ which is from 150 to 250°C, where foaming of the particles takes place,
d. cooling of the space within the mould to a temperature T₃ and
e. opening and removal of the rigid foam core.

2. Process according to Claim 1, **characterized in that** the P(M)I particles are prefoamed P(M)I particles of size from 1.0 to 25.0 mm.

3. Process according to Claim 1, **characterized in that** the P(M)I particles are P(M)I suspension polymers of size from 0.1 to 1.0 mm.

4. Process according to any of Claims 1 to 3, **characterized in that** foaming is carried out within a period of at most 2 min, and that steps a. to e. together are carried out within a period of from 5 to 45 min.

5. Process according to any of Claims 1 to 4, **characterized in that** step b. is carried out before step a.

6. Process according to any of Claims 1 to 4, **characterized in that** steps a. to e. are carried out in the sequence stated in Claim 1, and that the pressure p₂ is at most 10% smaller than p₁.

7. Process according to Claim 1, **characterized in that** the temperature T₂ is from 180 to 220°C, and that pressure p₃ is from atmospheric pressure to 1.5 bar.

8. Process according to any of Claims 1 to 7, **characterized in that** in step b. the particles are sucked and/or blown into the mould.

9. Process according to any of Claims 1 to 8, **characterized in that** in step b. the mould fill level reached when particles are charged to the mould is from 50 to 100%.

10. Process according to any of Claims 1 to 9, **characterized in that** the particles are held in step a. in a holding vessel at temperature T₁ and at the pressure P₁ and are charged batchwise to the mould in step b., and after the batchwise charging procedure here in each case the connection between holding vessel and mould is closed before the depressurization takes place in step c.

11. Process according to any of Claims 1 to 10, **characterized in that** the mould has, in both shells, a cavity of thickness from 2 to 20 cm which conforms to the internal shape and which covers the area of the space within the mould in a manner which in each case conforms to the shape, and through which a heating liquid is optionally passed in step c. and a cooling liquid is passed in step d.

12. Process according to Claim 11, **characterized in that** the heating liquid and the cooling liquid are the same type of liquid, and are passed from two different holding vessels with different temperatures into the cavity, that the temperature of the heating liquid is from 180 to 250°C and that the temperature of the cooling liquid is from 20 to 40°C.

13. Process according to at least one of Claims 2 to 12, **characterized in that** before step b. the internal sides of the mould shells are equipped with prepregs or organopanels, and in step e. the rigid foam core removed takes the form of a composite material with outer layers.

## Revendications

1. Procédé de fabrication de noyaux en mousse dure de poly(méth)acrylimide (P(M)I), comprenant les étapes de procédé suivantes :
a. le chauffage de particules de P(M)I à une température de moussage à pression normale T₁, qui est comprise entre 150 et 250 °C, celui-ci ayant lieu sous une pression p₁, qui est comprise entre 2 et 20 bar, lors duquel une augmentation de volume des particules de P(M)I d'au plus 10 % en volume en 10 minutes a lieu,
b. le remplissage d'un moule avec les particules de P(M)I, le remplissage ayant lieu à une pression p₂, qui est comprise entre 2 et 20 bar, puis la fermeture du moule,
c. la détente de l'espace intérieur du moule à une pression p₃, comprise entre 0,1 et 2,0 bar, à une température T₂, qui est comprise entre 150 et 250 °C, un moussage des particules ayant lieu,
d. le refroidissement de l'espace intérieur du moule à une température T₃, et
e. l'ouverture et l'extraction du noyau en mousse dure.

2. Procédé selon la revendication 1, **caractérisé en ce que** les particules de P(M)I sont des particules de P(M)I pré-moussées ayant une taille de particule comprise entre 1,0 et 25,0 mm.

3. Procédé selon la revendication 1, **caractérisé en ce que** les particules de P(M)I sont des polymères en suspension de P(M)I ayant une taille de particule comprise entre 0,1 et 1,0 mm.

4. Procédé selon l'une quelconque des revendications 1 à 3, **caractérisé en ce que** le moussage est réalisé en au plus 2 minutes, et **en ce que** les étapes de procédé a. à e. sont réalisées ensemble en 5 à 45 minutes.

5. Procédé selon l'une quelconque des revendications 1 à 4, **caractérisé en ce que** l'étape de procédé b. est réalisée avant l'étape de procédé a.

6. Procédé selon l'une quelconque des revendications 1 à 4, **caractérisé en ce que** les étapes de procédé a. à e. sont réalisées dans l'ordre indiqué dans la revendication 1, et **en ce que** la pression p₂ est inférieure d'au plus 10 % à p₁.

7. Procédé selon la revendication 1, **caractérisé en ce que** la température T₂ est comprise entre 180 et 220 °C, et **en ce que** la pression p₃ est comprise entre la pression normale et 1,5 bar.

8. Procédé selon l'une quelconque des revendications 1 à 7, **caractérisé en ce que** les particules sont aspirées et/ou injectées dans le moule à l'étape de procédé b.

9. Procédé selon l'une quelconque des revendications 1 à 8, **caractérisé en ce que** le moule est rempli jusqu'à un niveau de remplissage compris entre 50 et 100 % avec les particules à l'étape de procédé b.

10. Procédé selon l'une quelconque des revendications 1 à 9, **caractérisé en ce que** les particules sont entreposées à l'étape de procédé a. dans un contenant de stockage à une température T₁ et à la pression p₁, et placées par lots à l'étape de procédé b. dans le moule, la connexion entre le contenant de stockage et le moule étant fermée à chaque fois après le remplissage par lots avant que la détente n'ait lieu à l'étape de procédé c.

11. Procédé selon l'une quelconque des revendications 1 à 10, **caractérisé en ce que** l'outil présente dans les deux coques une cavité d'une épaisseur comprise entre 2 et 20 cm, suivant le contour intérieur, recouvrant la surface de l'espace intérieur du moule en suivant à chaque fois le contour, dans laquelle un liquide chauffant à l'étape de procédé c. et un liquide réfrigérant à l'étape de procédé d. sont éventuellement conduits.

12. Procédé selon la revendication 11, **caractérisé en ce que** le liquide chauffant et le liquide réfrigérant sont le même type de liquide, et sont conduits depuis deux contenants de stockage différents à une température différente dans la cavité, **en ce que** le liquide chauffant présente une température comprise entre 180 et 250 °C et **en ce que** le liquide réfrigérant présente une température comprise entre 20 et 40 °C.

13. Procédé selon au moins l'une quelconque des revendications 1 à 12, **caractérisé en ce que** les côtés intérieurs des coques du moule sont recouverts avant l'étape de procédé b. avec des pré-imprégnés ou des tôles organiques, et le noyau de mousse dure est extrait à l'étape de procédé e. sous la forme d'un matériau composite muni de couches de recouvrement.
